# EUROPEAN PATENT APPLICATION

(11) **EP 1 605 369 A1**
(43) Date of publication of application: **14.12.2005**
(21) Application number: 04445069.0
(22) Date of filing: 07.06.2004
(51) Int. Cl.: G06F 17/30

(54) **Document database**

(71) Applicant: ArchiveOnline AB, 113 50 Stockholm (SE)
(72) Inventor: Sayeler, Joni, 172 72 Sundbyberg (SE); Wretblad, Linus, 131 65 Nacka (SE)
(74) Representative: Wihlsson, Joakim Per Magnus

(57) **Abstract**

The present invention relates to a document database for organizing text-searchable information. A data storage (170) includes an original layer database (175) and a supplementary layer database (176). The original layer database (175) stores non-editable electronic documents in a folder structure. The supplementary layer database (176), for each electronic document in the original layer database (175), stores an amendable data record including a number of logic fields. Moreover, a direct link exits between each pair of non-editable electronic document and amendable data record, such that a one-to-one relationship is established. Both the original layer database (175) and the supplementary layer database (176) are adapted to be accessed and searched via a user interface (180) and an interconnecting network (190). Thus, a highly flexible user-access to the electronic information stored in the data storage (170) is enabled. At the same time the integrity of the information stored in the data storage (170) is guaranteed.

## Description

### THE BACKGROUND OF THE INVENTION AND PRIOR ART

The present invention relates generally to a document database for storage and organization of text-searchable information. More particularly the invention relates an arrangement according to the preamble of claim 1 and a method according to claim 21. The invention also relates to a computer program according to claim 36 and a computer readable medium according to claim 37.

Modern information technology and the advent of the Internet has provided us with sophisticated means of gaining and organizing large quantities of information, for instance originating from intellectual property documents, such as patents. Today, many solutions exist which enable a processing and/or updating of this information.

The patent document EP, 1 258 813 describes a patent information system through which a search engine provides a user with access to one or more databases for searching documents. A so-called pop up window may here be associated with a particular document. The user may then enter comments in respect of the document by means of this pop up window. Thus, subsequently, not only the document may be viewed, however also any user-comments associated thereto. Moreover, one or more documents encountered in a search which has been performed by a first user may be forwarded to a second user.

The patent document WO03/030033 describes a system for generating a work set of patents or other documents. The system enables work file records to be created, which contain document identifiers for a list of documents that a user wants to group together. The document identifiers of the work file records link to document records stored on a document database. Hence, by grouping documents together, a user can recall the group of documents for review or some form of analysis at a later time.

The patent document US 2002/0138474 discloses an apparatus for searching and organizing intellectual property information, which utilizes a field-of-search. The search results may here be ordered, sorted and recorded according to at least one order preference set by a user. Original data may be accessed via the web sites of national and international intellectual property organizations, such as the USPTO, the EPO and the WIPO. On-line access is also provided to relevant classification information.

The patent document US 2001/0003818 describes a solution according to which a reference database may be created, for instance containing computer-readable bibliographic information. The reference data and any bibliographic information are stored in a single data file, such that no data is lost upon a relocation of the file.

The patent document US 2002/0022974 discloses a system for automatically collecting patent data from the Internet and grouping together the data in a local database where the data may be viewed on a statistical format.

Consequently, the prior art includes various examples of solutions according to which electronic documents are collected in a database, and where the text information contained in the documents may be computer searched. Many of the known solutions also enable users to add commentary information, which is linked to particular documents. Moreover, according to some prior-art solutions bibliographic, and similar, information is automatically retrieved from the Internet. However, there is yet no technical solution that fully guarantees the integrity of all the information collected in such a database, and at the same time, allows the data to be organized according to an amendable hierarchical structure.

Namely, according to the known solutions, there are either web links (or corresponding) between the records of an amendable database and various public databases, or all data (i.e. amendable information as well as source data) is stored in one and the same database. In the first case, the amendable data (e.g. commentary data of potentially highly confidential nature) may unintentionally become available to unauthorized readers via the external link. In the latter case, the entire database may be proprietary, and thus the risk of unauthorized access to the data may be reduced. However, instead, the integrity of the source data is severely threatened.

### SUMMARY OF THE INVENTION

The object of the present invention is therefore to provide a solution for organizing electronic documents, which avoids the above problems and thus offers a highly flexible data storage where the integrity of the stored data is fully protected.

According to one aspect of the invention, the object is achieved by the initially described arrangement, wherein the data storage includes an original layer database and a supplementary layer database. The original layer database is adapted to store non-editable electronic documents in a folder structure, and the supplementary layer database is adapted to, for each electronic document in the original layer database, store an amendable data record including a number of logic fields, with a direct link between each pair of non-editable electronic document and amendable data record. Moreover, each of the original layer database and the supplementary layer database is adapted to be accessed and searched via the user interface.

An important advantage attained by this arrangement is that the direct link between the databases in the data storage renders it possible to access and manipulate the data both logically (i.e. by means of search terms and search fields) and physically (i.e. via a folder structure). Moreover, a split data storage can be created where different customers have completely separated sets of data. Each customer may here choose to organize his/her data according to whichever hierarchical structure that he/she finds appropriate with respect to his/her particular interests. For example, a first customer, represented by company A, may organize a group of patents in relation to which its current development projects are influenced by these patents, while a second customer, represented by company B, may organize another group of patents (possibly overlapping the first user's group of patents) in relation to which of its products that are affected by these patents. Of course, each customer has their respective portion of the supplementary layer database at their disposal, such that the first and second customers may freely create, edit and delete the logic fields as they wish. Moreover, each customer may add his/her own/private material to the supplementary layer database. This added material may be copyrighted and is likely to be confidential. Such an upload is therefore preferably completed over an encrypted channel provided via the user interface. Furthermore, since each customer may remove any unwanted documents from the data storage, a very slim and quick system may be attained, which typically is by far faster than today's commercial on-line providers of intellectual property information.

According to a preferred embodiment of this aspect of the invention, the arrangement includes a search engine module. This module is adapted to: receive a user-entered search query via the user interface; search the electronic information contained in the data storage in response to the search query; and display a search result based on pieces of information in the original layer database and the supplementary layer database which match the search query. The search result is presumed to include a set of components, which each is dynamically selectable via the user interface. Naturally, such a search engine module is desirable, since it provides an efficient user-access to the information in the data storage.

According to a preferred embodiment of this aspect of the invention, the search engine module is adapted to, via the user interface, enable a selection of a sub-set of the components of the search result. This feature is advantageous because it allows a user to manually remove undesired and/or unnecessary elements from the search result, and thus increase its relevance to the user.

According to another preferred embodiment of this aspect of the invention, the search engine module is adapted to, via the user interface, enable concurrent addition of information to at least a sub-set of the amendable data records of the search result. Again, this is a feature which renders it possible to further increase the relevance of the search result to a particular user. Therefore the feature is desirable.

According to another preferred embodiment of this aspect of the invention, the arrangement includes a mail group communication module, which is adapted to generate an electronic mail to at least one recipient based on at least a sub-set of a search result of an original search performed in the data storage. For each hit of the search result, the electronic mail reflects the same components as the original search. Hence, a first user may share the result of a certain search with one or more other users, for example in order to gain their opinions and comments thereto.

According to another preferred embodiment of this aspect of the invention, the arrangement includes an upload module, which is adapted to enable storage of at least one electronic document in the original layer database via the user interface. Consequently, the users may add new documents to the system, which of course, provides flexibility desirable in many applications.

According to another preferred embodiment of this aspect of the invention, the upload module is further adapted to, for each of the at least one electronic document to be stored in the original layer database; investigate whether on-line data is available in respect of the electronic document; and if no, or at least insufficient on-line data is found, enable a manual entry of predefined types of data in an amendable data record of the supplementary database linked to the electronic document. Thereby, the data quality of the stored information may be improved significantly.

According to another preferred embodiment of this aspect of the invention, the arrangement includes an edit module, which is adapted to, via the user interface: enable storage, editing and deletion of at least one amendable data record in the supplementary layer database. The edit module is also adapted to, via the user interface: enable deletion of at least one non-editable electronic document in the original layer database. Such an edit module is desirable because it enables enhancement of the data quality, as well as to removal of any undesired documents.

According to another preferred embodiment of this aspect of the invention, the edit module is adapted to receive deletion operations in respect of the amendable data records. In response to such an operation, the edit module is adapted to delete the amendable data record and the non-editable electronic document linked thereto. Thereby, the edit module may be used to conveniently remove any undesired data records along with the corresponding electronic documents.

According to another preferred embodiment of this aspect of the invention, the edit module is adapted to be activated via a search result window presented by the search engine module via the user interface. Here, the search result window provides a user-access to at least one amendable data record in the supplementary layer database. This is desirable, because thereby a user may easily add or amend data in respect of the hits found in the search.

According to another preferred embodiment of this aspect of the invention, the edit module is adapted to enable modification of the supplementary layer database over the user interface. This modification involves addition of at least one logic field to at least one amendable data record in the supplementary layer database, deletion of at least one logic field from at least one amendable data record in the supplementary layer database, or editing of at least one amendable data record in the supplementary layer database. Again, the edit module thereby offers the user a convenient means to add, remove and/or alter data records in the supplementary layer database.

According to another preferred embodiment of this aspect of the invention, the arrangement includes an administrator module adapted to apply a modification policy in respect of the edit module. The modification policy specifies which user identity that is authorized to perform which of said addition, deletion and editing of the supplementary layer database. Thus, each user may be given an individually adapted access level to the information in the data storage.

According to another preferred embodiment of this aspect of the invention, the administrator module is also adapted to create new customer accounts. Each customer account is presumed to be associated with a respective separate portion of the original layer database and a separate portion of the supplementary layer database. Moreover, each customer account has a modification policy for at least one user associated with the account. This is a desirable feature, since thereby customers may be added to the system without influencing any existing customers, or their data access.

According to another preferred embodiment of this aspect of the invention, the arrangement includes a data registration engine, which is adapted to: systematically scan the contents of the original layer database; compare a currently detected content of the original layer database with a previously detected content thereof, if at least one added electronic document is encountered in the currently detected content, generate an amendable data record for each of the at least one added electronic document, and generate a direct link between each amendable data record and each respective added electronic document. If instead, at least one deleted electronic document is encountered in the currently detected content, the data registration engine is adapted to delete any amendable data records for the at least one deleted electronic document. Hence, a one-to-one relationship between the contents of the original layer database and the supplementary layer database is ensured.

According to another preferred embodiment of this aspect of the invention, the arrangement includes a data-fetching module. Moreover, the data registration engine is adapted to: control the data fetching module to search the Internet to obtain at least one missing predefined type of data; and enter any obtained missing predefined type of data in a relevant amendable data record of the supplementary layer database. Thereby, the data quality of the stored information may be improved significantly.

According to another preferred embodiment of this aspect of the invention, the arrangement comprises an optical character recognition (OCR) module. Additionally, the data registration engine is adapted to, in connection with generating an amendable data record for an electronic document added to the original layer database: control the OCR module to scan the added electronic document to obtain predefined types of data to be entered in the amendable data record of the supplementary layer database; enter any obtained predefined types of data in the amendable data record of the supplementary layer database; analyze any data obtained by the OCR module; and if at least one predefined type of data is missing in respect of an electronic document added to the original layer database; control the data fetching module to search the Internet to obtain the at least one missing predefined type of data; and enter any obtained missing predefined type of data in an amendable data record of the supplementary layer database linked to the added electronic document. Again, this further enhances the data quality of the stored information.

According to another preferred embodiment of this aspect of the invention, it is presumed that the electronic documents represent intellectual property documents, e.g. patent applications. Further, each document is assigned at least one class. The arrangement here includes a multi-class fetching module, and the data registration engine is adapted to: analyze a class field of an amendable data record in the supplementary layer database for a particular electronic document in the original layer database; and if in the amendable data record, at least one class entry is missing out of a number of class entries in respect of classification systems in addition to the classification system, control the multi-class fetching module to search the Internet to obtain the at least one missing class entry; and enter any obtained missing class entry in the amendable data record. Thus, a richer classification picture may be obtained in respect of the data record.

According to another preferred embodiment of this aspect of the invention, the arrangement includes a data fill-in fetching module. Moreover, the data registration engine is adapted to: analyze an amendable data record of the supplementary layer database for a particular electronic document in the original layer database; and if at least one data field out of a number of predefined data fields in the amendable data record is empty or does not fulfill a language criterion (for instance by containing non-English text), control the data fill-in fetching module to search the Internet for patent family members of the patent document represented by the particular electronic document to obtain information to fill the at least one data field; and enter any obtained information in the amendable data record.

According to another preferred embodiment of this aspect of the invention, the data registration engine is adapted to, after having detected an electronic document added to the original layer database: investigate whether at least one of the added electronic documents contains image only information; and if so control the OCR module to generate a respective text file representing any text contents of said at least one added electronic document, and store each text file in association with a relevant added electronic document in the original layer database, such that the text file is searchable along with said at least one added electronic document. This is desirable, since thereby the searching possibilities are improved.

According to another preferred embodiment of this aspect of the invention, the arrangement includes an order module, which is adapted to, via the user interface: receive a listing of identifiers specifying a number of electronic documents to be added to the original layer database; search the Internet to obtain the specified electronic documents; download the specified electronic documents to the original layer database; investigate whether at least one of the added electronic document contains image only information, and if so control the OCR module to generate a respective text file representing any text contents of said at least one added electronic document; and store each text file in association with a relevant added electronic document in the original layer database, such that the text file is searchable along with said at least one added electronic document. Naturally, this is an advantageous feature.

According to another aspect of the invention, the object is achieved by a method of organizing text-searchable electronic information in a data storage, where the data storage includes an original layer database and a supplementary layer database. The non-editable electronic documents of the original layer database are organized in a folder structure, and the supplementary layer database, for each electronic document in the original layer database, contains an amendable data record with a direct link to the non-editable electronic document. Moreover, each of the original layer database and the supplementary layer database is adapted to be accessed and searched via a user interface over an interconnecting network. The proposed method involves storing an electronic document in an electronic folder of said folder structure, the electronic folder having a specific folder name.

This method is advantageous because thereby a user-specific hierarchy may be accomplished, such that the information can be searched in a manner which is ideal with respect to a particular customer's needs and/or preferences.

According to a preferred embodiment of this aspect of the invention, the method involves investigating whether on-line data in respect of the stored electronic document is available, and if so the method comprises: fetching predefined types of data for the document on the Internet. Otherwise the method comprises: enabling a manual entry of the predefined types of data. Consequently, the information quality is improved in relation to an initial level.

According to another preferred embodiment of this aspect of the invention, the method includes the steps of: storing bibliographic data related to the electronic document in an amendable data record of a supplementary layer database; creating a direct link between the stored electronic document and the amendable data record; and adding the folder name to the amendable data record. These steps are desirable because they vouch for a further enhancement of the information quality.

According to another preferred embodiment of this aspect of the invention, the method includes the method comprises generating an amendable data record for an electronic document in the original layer database. Moreover, in connection there with the method involves: scanning the electronic document to obtain predefined types of data to be entered in the supplementary layer database; and entering any obtained predefined types of data in a relevant amendable data record of the supplementary layer database. Again, this leads to a better information quality.

According to another preferred embodiment of this aspect of the invention, the method includes the steps of: analyzing the entered data with respect to predefined types of data, and if at least one predefined type of data is missing in respect of the electronic document; searching the Internet to obtain the at least one missing predefined type of data; and entering any obtained missing predefined type of data in an amendable data record of the supplementary layer database linked to the electronic document.

According to another preferred embodiment of this aspect of the invention, the method includes the steps of: analyzing an amendable data record of the supplementary layer database for a particular electronic document in the original layer database; and if at least one data field out of a number of predefined data fields in the amendable data record is empty or does not fulfill a language criterion; searching the Internet for family members of the intellectual property document represented by the particular electronic document to obtain information to fill said at least one data field; and entering any obtained information in the amendable data record. These steps are desirable because they provide the user with a richer family picture than what is initially available.

According to another preferred embodiment of this aspect of the invention, the method involves modifying the supplementary layer database by means of at least one of the operations: adding at least one logic field to at least one amendable data record in the supplementary layer database; deleting at least one logic field from at least one amendable data record in the supplementary layer database; and editing at least one amendable data record in the supplementary layer database. Thus, the relevance of the information in the data storage may be improved.

According to a preferred embodiment of this aspect of the invention, the method includes the steps of: scanning systematically the contents of the original layer database; comparing a currently detected content of the original layer database with a previously detected content thereof, and if at least one added electronic document is encountered in the currently detected content; generating an amendable data record for each of the at least one added electronic document; and generating a direct link between each amendable data record and each respective added electronic document. Hence, a one-to-one relationship between the contents of the original layer database and the supplementary layer database can be ensured.

According to another preferred embodiment of this aspect of the invention, the method includes the steps of: receiving a listing of identifiers specifying a number of electronic documents to be added to the original layer database; searching the Internet to obtain the specified electronic documents; downloading the specified electronic documents to the original layer database; investigating, for each electronic document to be added whether the document contains image only information, and if so generating a text file that represents any text contents of the added electronic document; and storing the text file in association with the added electronic document in the original layer database, such that the text file is searchable along with the added electronic document. This is highly desirable because thereby a so-called batch uploading of documents is facilitated.

According to another preferred embodiment of this aspect of the invention, the method includes the steps of: receiving a user-entered search query; searching the information contained in the data storage in response to the search query; and displaying a search result based on pieces of information in the original layer database and the supplementary layer database which match the search query. Moreover, the search result includes a set of dynamically selectable components. This is advantageous because thereby the user may manually reduce the search result, preferably by selecting a sub-set of the components of the search result, and then for instance, perform a more detailed analysis based on the sub-set.

According to another preferred embodiment of this aspect of the invention, the method includes the steps of: receiving user-entered information related to a search result including a number of amendable data records; and adding said user-entered information to the amendable data records of the search result. This is desirable, since it allows the user to manually enhance the data quality of the search result, for instance by adding his/her own view of the individual hits in the search result.

According to another preferred embodiment of this aspect of the invention, the method includes generating an electronic mail to at least one recipient based on at least a sub-set of a search result of an original search performed in the data storage. Here, the electronic mail reflects, for each hit of the search result, components which are equivalent to the dynamic components of the original search. Thus, the user may forward an entire search result, or a portion thereof, to one or more other people, such that they may review and/or comment on the result. Of course, the user may also append his/her own analysis of the search result to the electronic mail.

According to a further aspect of the invention, the object is achieved by a computer program, which is directly loadable into the internal memory of a computer, and includes software for controlling the above proposed method when said program is run on a computer.

According to another aspect of the invention, the object is achieved by a computer readable medium, having a program recorded thereon, where the program is to control a computer to perform the above-proposed method.

Further advantages, advantageous features and applications of the present invention will be apparent from the following description and the dependent claims.

### BRIEF DESCRIPTION OF THE DRAWINGS

The present invention is now to be explained more closely by means of preferred embodiments, which are disclosed as examples, and with reference to the attached drawings.
- Figure 1: shows a block diagram of an arrangement according to an embodiment of the invention, and
- Figure 2: shows a flow diagram which describes the general method according to the invention plus preferred embodiments thereof.

### DESCRIPTION OF PREFERRED EMBODIMENTS OF THE INVENTION

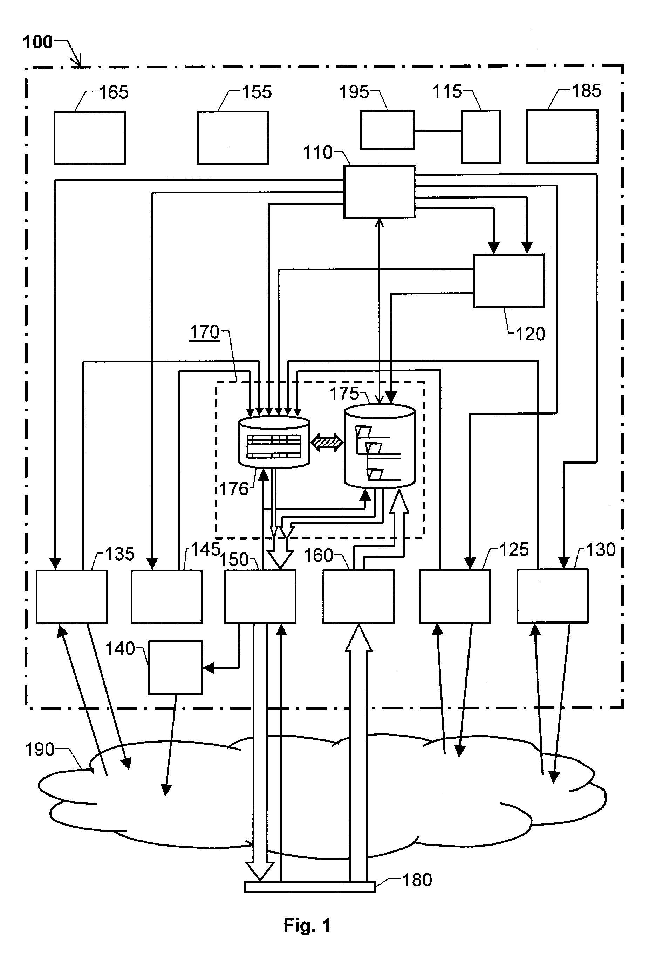

Figure 1 shows a block diagram of an arrangement for organizing electronic documents according to an embodiment of the invention. The arrangement includes a central resource 100, for example a server connected to the Internet. The central resource 100 is associated with a data storage 170 adapted to store electronic information in a text-searchable format. The data storage 170, in turn, contains an original layer database 175 and a supplementary layer database 176. The original layer database 175 is adapted to store non-editable electronic documents in a folder structure (symbolically illustrated in the figure). The supplementary layer database 176, which may be an SQL-database (implemented by a variety of operating systems) or a Microsoft File Server, is adapted to, for each electronic document in the original layer database 175, store an amendable data record including a number of logic fields (which are symbolically illustrated in the figure). Moreover, there is a direct link between each pair of non-editable electronic document and amendable data record. Both the original layer database 175 and the supplementary layer database 176 are adapted to be accessed and searched via the user interface 180, which for instance is implemented in a personal computer (PC). Preferably, at least one interconnecting network 190, such as the Internet, is used to accomplish a communication path between the user interface 180 and the central resource 100. Hence, the user interface 180 may be represented by an Internet browser, such as Netscape™, Internet Explorer™ and Opera™. Thereby, a user may be positioned at an arbitrary location with access to at least one interconnecting network 190 that is further connected to the central resource 100, and thus be able to interact with the information therein. Moreover, the communication over the user interface 180 is preferably encrypted to provide protection for the data communicated between the central resource 100 and the user. For instance, the user interface 180 may present a so-called virtual desktop to the user. Thereby, after having logged into the system, a comparatively fast and reliable connection is attained.

According to a preferred embodiment of the invention, the central resource 100 is associated with a search engine module 150, which is adapted to receive a user-entered search query via the user interface 180. Then, in response to the search query, the search engine module 150 searches the electronic information contained in the data storage 170. Subsequently, based on pieces of information in the original layer database 175 and the supplementary layer database 176 that match the search query, the search engine module 150 displays a search result. Provided that at least one hit occurs, the search result includes a set of components, which each is dynamically selectable via the user interface 180.

Moreover, the search engine module 150 is preferably adapted to enable selection of a sub-set of the components of the search result, which is effected via the user interface 180. In practice, such a selection may be performed by a click checkbox presented in connection with each respective component on a computer display of the user interface 180. According to another preferred embodiment of the invention, the search engine module 150 is adapted to, also via the user interface 180, enable concurrent addition of information to at least a sub-set of the amendable data records of the search result.

Preferably, the central resource 100 is associated with a mail group communication module 140, which is adapted to generate an electronic mail to at least one recipient based on at least a sub-set of a search result of an original search performed in the data storage 170. In similarity with the above, this sub-set may also be selected out by means of click checkboxes. In any case, the electronic mail, for each hit of the search result, reflects the same components as those of the original search result (either before or after a user-selection of a sub-set of the components).

According to another preferred embodiment of the invention, the central resource 100 is associated with an upload module 160, which is adapted to enable storage of at least one electronic document in the original layer database 175 via the user interface 180. Preferably, the upload module 160 is adapted to, for each of the at least one electronic document to be stored in the original layer database 175 perform the following steps. First, investigate whether on-line data is available in respect of the electronic document. This investigation may depend on many different parameters. For instance, if the electronic document represents a patent, or a published patent application, one or more patent databases on the Internet may be searched for relevant data. For other types of documents, such as publications of IEEE (Institute of Electrical and Electronics Engineers, Inc.) relevant information may also be found on the Internet, however at different web sites. Nevertheless, if insufficient on-line data is found, a manual entry of predefined types of data is enabled in an appropriate amendable data record of the supplementary database 176, i.e. the data record which is linked to the electronic document in question.

Additionally, it is preferable if the central resource 100 is associated with an edit module 165, which is adapted to, via the user interface 180 enable the following functions: storage, editing and deletion of at least one amendable data record in the supplementary layer database 176; and deletion of at least one non-editable electronic document in the original layer database 175. Moreover, in response to a deletion operation in respect of an amendable data record, the edit module 165 is preferably adapted to delete both the amendable data record and the non-editable electronic document linked thereto. According to a preferred embodiment of the invention, the edit module 165 may also be activated via a search result window presented by the search engine module 150 via the user interface 180. The search result window includes such selection elements, e.g. links or click buttons, that provides the user access to at least one amendable data record in the supplementary layer database 176.

Additionally, the edit module may be adapted to enable a modification of the supplementary layer database 176 over the user interface 180. The modification is here presumed to involve addition of at least one logic field to at least one amendable data record in the supplementary layer database 176, deletion of at least one logic field from at least one amendable data record in the supplementary layer database 176, and/or editing of at least one amendable data record in the supplementary layer database 176. Although it is technically feasible to only influence the logic fields of a sub-set of the data records in the supplementary layer database 176 by means of these addition and deletion operations, it is normally most interesting if any additions or deletions of the logic fields have a global impact, i.e. affect all the data records in the supplementary layer database 176.

Naturally, in most cases, it is preferred that not all users have the right to perform all of the above modifications of the information in the data storage 170. Therefore, the central resource 100 may be associated with an administrator module 155, which is adapted to apply a modification policy in respect of the edit module 165. The modification policy, in turn, specifies which user identity that is authorized to perform which of said addition, deletion and editing of the supplementary layer database 176.

Moreover, it is further preferable if the administrator module 155 is adapted to create new customer accounts, where each account is associated with a respective separate portion of the original layer database 175 and a separate portion of the supplementary layer database 176. This means that a first customer only has access to its particular information in the data storage 170, and thus cannot access, or by other means manipulate, any information in the data storage 170 which belongs to a second customer. As mentioned above, each customer account has a modification policy, which specifies the add-, delete- and edit-rights for at least one user identity associated with the account with respect to the supplementary layer database 176.

According to yet another preferred embodiment of the invention, the central resource 100 is associated with a data registration engine 110, which is adapted to perform the following steps. The data registration engine 110 systematically scan the contents of the original layer database, it then compares a currently detected content of the original layer database 175 with a previously detected content thereof. If at least one added electronic document is encountered in the currently detected content, the data registration engine 110 generates an amendable data record for each of the at least one added electronic document, and generates a direct link between each amendable data record and each respective added electronic document. If, on the other hand, at least one deleted electronic document is encountered in the currently detected content, the data registration engine 110 deletes any amendable data records for the at least one deleted electronic document.

Furthermore, the central resource 100 may be associated with a data-fetching module 130. According to this embodiment of the invention, the data registration engine 110 is adapted to: control the data fetching module 130 to search the Internet to obtain at least one missing predefined type of data; and then enter any obtained missing predefined type of data in a relevant amendable data record of the supplementary layer database 176.

The central resource 100 may also be associated with an OCR module 120. According to this embodiment of the invention, in connection with generating an amendable data record for an electronic document added to the original layer database 175, the data registration engine 110 is adapted to: control the OCR module 120 to scan the added electronic document to obtain predefined types of data to be entered in the amendable data record of the supplementary layer database 176; and enter any obtained predefined types of data in the amendable data record of the supplementary layer database 176. The data registration engine 110 also analyzes any data obtained by the OCR module 120, and if at least one predefined type of data is missing in respect of an electronic document added to the original layer database 175, the data registration engine 110 controls the data fetching module 130 to search the Internet to obtain the at least one missing predefined type of data; and the enters any obtained missing predefined type of data in an amendable data record of the supplementary layer database 176 linked to the added electronic document.

According to one preferred embodiment of the present invention, the electronic documents represent intellectual property documents, say published patent applications. Additionally, it is presumed that each document is assigned at least one class of a first classification system, say the IPC (International Patent Classification) system. A multi-class fetching module 135 is here associated with the central resources 100, and the data registration engine 110 is adapted to analyze a class field of an amendable data record in the supplementary layer database 176 for a particular electronic document in the original layer database 175. If, in the amendable data record, at least one class entry is missing out of a number of class entries in respect of classification systems in addition to the classification system, say ECLA (the European Classification) system used by the European Patent Office or the US classification system used by the US Patent and Trademark Office, the data registration engine 110 controls the multi-class fetching module 135 to search the Internet to obtain the at least one missing class entry. Then, the data registration engine 110 enters any obtained missing class entries in the amendable data record. As a result, a total patent classification picture is automatically obtained, which is richer than what is possible to acquire by any yet known solution.

The central resource 100 may also be associated with a data fill-in fetching module 135. According to this embodiment of the invention, the data registration engine 110 is adapted to perform the following steps. First, the data registration engine 110 analyzes an amendable data record of the supplementary layer database 176 for a particular electronic document in the original layer database 175. If at least one data field out of a number of predefined data fields in the amendable data record is empty, or at least does not fulfill a language criterion (say, by including non-English text), the data registration engine 110 controls the data fill-in fetching module 135 to search the Internet for patent family members of the patent document represented by the particular electronic document to obtain information to fill said at least one data field. Finally, the data registration engine 110 enters any obtained information in the amendable data record.

Furthermore, the data registration engine 110 may be adapted to, after having detected an electronic document added to the original layer database 175, investigate whether at least one of the added electronic documents contains image only information. If, such an image-only document is found, the data registration engine 110 controls the OCR module 120 to generate a respective text file representing any text contents of said at least one added electronic document. Thereafter, the data registration engine 110 stores each text file in association with a relevant added electronic document in the original layer database 175, such that the text file is searchable along with the respective added electronic document.

According to a preferred embodiment of the invention, the central resource 100 is associated with an order module 185, which is adapted to effect the following functions via the user interface 180: receive a listing of identifiers specifying a number of electronic documents to be added to the original layer database; search the Internet to obtain the specified electronic documents; download the specified electronic documents to the original layer database 175; investigate whether at least one of the added electronic document contains image only information, and if so control the OCR module 120 to generate a respective text file representing any text contents of said at least one added electronic document; and store each text file in association with a relevant added electronic document in the original layer database 175, such that the text file is searchable along with said at least one added electronic document.

Moreover, the central resource 100 is preferably associated with a computer readable medium 115 adapted to store a program, which is to make a processing unit 195 control the above-described functions of the proposed arrangement when said program is run on the processing unit 195.

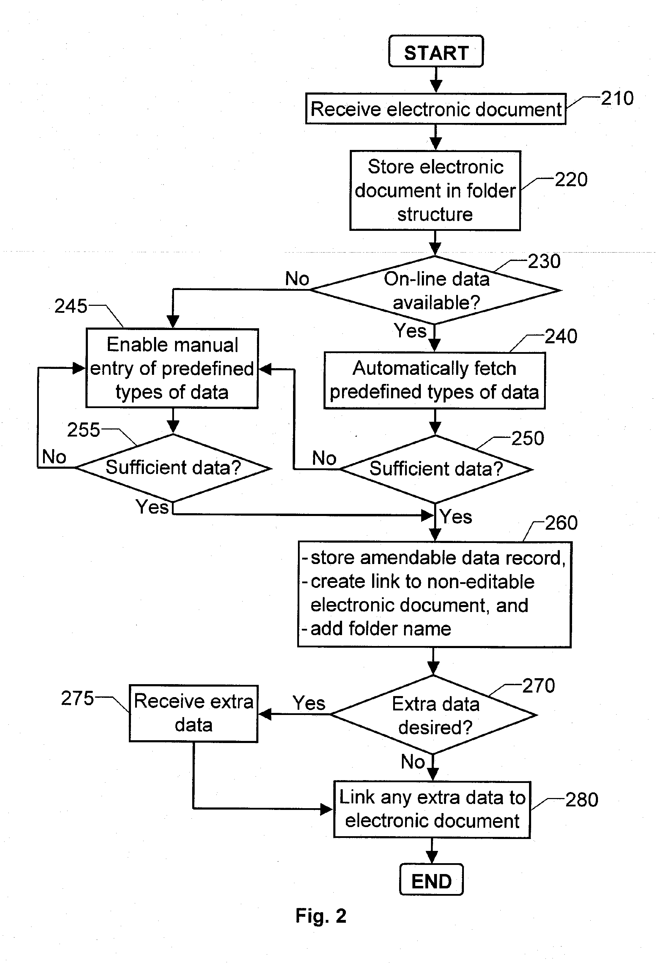

In order to sum up, the general method according to the invention, and preferred embodiments thereof, will now be described with reference to figure 2.

A first step 210 receives an electronic document. Naturally, here two or more electronic documents may equally well be received in a batch. However, for reasons of a clear presentation, the following procedure is described exclusively with reference to a single added electronic document. A following step 220 stores the electronic document in an electronic folder of said folder structure. The electronic folder is presumed to have a specific folder name.

Subsequently, according to a preferred embodiment of the invention, a step 230 investigates whether on-line data is available in respect of the stored electronic document. If this is the case, a step 240 follows. Otherwise, a step 245 enables a manual entry of at least one predefined type of data. For instance, if the electronic document represents a patent, a patent application or another intellectual property document, the predefined types of data may include bibliographic data. Then, a step 255 checks whether sufficient data has been entered. Depending on the application and the customer preferences, the definition of what is "sufficient data" may vary, such that also "no data" is considered sufficient, "all the existing fields are requested to be filled with acceptable data", or anything there between. In any case, whenever sufficient data has been received, the procedure continues to a step 260.

The step 240 involves automatically fetching the at least one predefined type of data, preferably on the Internet. Subsequently, a step 250 checks whether this fetching was successful enough to acquire a sufficient amount of data. If so, the step 260 follows, and otherwise the procedure continues with the step 245 to allow a manual data entry of any missing pieces of information.

Alternatively, the fetching of the step 240 may be initiated automatically, for instance, in connection with the storage of the step 220. The entered data is analyzed with respect to the predefined types of data. Then, if at least one predefined type of data is missing in respect of the electronic document, the Internet is searched to obtain the at least one missing predefined type of data. After that, any obtained missing predefined type of data is entered in an amendable data record of the supplementary layer database.

Provided that the electronic documents represent intellectual property documents, and each document is assigned at least one class of a first classification system, the automatic fetching may involve analyzing a class field of an amendable data record in the supplementary layer database for a particular electronic document in the original layer database. If, in the amendable data record, at least one class entry is missing out of a number of class entries in respect of classification systems in addition to the patent classification system. The Internet is searched to obtain the at least one missing class entry. Then, any obtained missing class entry is entered in the amendable data record. Moreover, if the analysis finds that at least one data field out of a number of predefined data fields in the amendable data record is empty, or does not fulfill a language criterion, the automatic fetching may involve searching the Internet for family members of the intellectual property document represented by the particular electronic document to obtain information to fill said at least one data field. After that, any obtained family information is entered in the amendable data record.

Finally, the automatic fetching step may involve investigating whether the electronic document contains image only information. If this is the case, a text file is generated which represents any text contents of the added electronic document.

The step 260 involves storing the predefined types of data related to the electronic document in an amendable data record of a supplementary layer database. In this step, a direct link is also created between the stored electronic document and the amendable data record. Furthermore, the specific folder name mentioned above in relation to the step 210 is added to the amendable data record, for example in a category field dedicated for this purpose.

In connection with generating an amendable data record for an electronic document in the original layer database, the procedure preferably involves, scanning the electronic document to obtain predefined types of data to be entered in the supplementary layer database; and entering any obtained predefined types of data in a relevant amendable data record of the supplementary layer database. Moreover, any text file generated by the system, for instance in connection with the automatic fetching of the step 240, is preferably stored in association with the added electronic document in the original layer database, such that the text file is searchable along with the added electronic document.

Following the step 260, a step 270 investigates whether extra data in addition to what has been stored in the step 260 is desired, and if so a step 275 follows. Otherwise, a step enters any extra data in the amendable data record and thereby links this data to the added electronic document. Clearly, in the trivial case, the extra data is empty (or non-existing) and no such data is entered in the amendable data record.

The step 275 receives the desired extra data, which typically is entered manually. Then, the step 280 follows.

In addition to the above steps performed in connection with addition of new electronic documents to the data store, the proposed procedure preferably also involves: scanning systematically the contents of the original layer database; and comparing a currently detected content of the original layer database with a previously detected content thereof.

If at least one added electronic document is encountered in the currently detected content, an amendable data record is generated for each of the at least one added electronic document; and a direct link is generated between each amendable data record and each respective added electronic document. Similarly, if at least one deleted electronic document is encountered in the currently detected content, any remaining amendable data records for each of the at least one deleted electronic document are deleted.

All of the process steps, as well as any sub-sequence of steps, described with reference to the figure 2 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. An arrangement for organizing electronic documents, the arrangement comprising:
a data storage (170) adapted to store electronic information in a text-searchable format,
a user interface (180) adapted to, via an interconnecting network (190), enable a user-access to the electronic information stored in the data storage (170), **characterized in that**
the data storage (170) comprises an original layer database (175) and a supplementary layer database (176), the original layer database (175) is adapted to store non-editable electronic documents in a folder structure; the supplementary layer database (176) is adapted to, for each electronic document in the original layer database (175), store an amendable data record including a number of logic fields, with a direct link between each pair of non-editable electronic document and amendable data record; each of the original layer database (175) and the supplementary layer database (176) is adapted to be accessed and searched via the user interface (180).

2. An arrangement according to claim 1, **characterized in that** the arrangement comprises a search engine module (150) which is adapted to:
receive a user-entered search query via the user interface (180);
search the electronic information contained in the data storage (170) in response to the search query; and
display a search result based on pieces of information in the original layer database (175) and the supplementary layer database (176) which match the search query, the search result comprising a set of components which each is dynamically selectable via the user interface (180).

3. An arrangement according to claim 2, **characterized in that** the search engine module (150) is adapted to, via the user interface (180), enable a selection of a sub-set of the components of the search result.

4. An arrangement according to any one of the claims 2 or 3, **characterized in that** the search engine module (150) is adapted to, via the user interface (180), enable concurrent addition of information to at least a sub-set of the amendable data records of the search result.

5. An arrangement according to any one of the claims 2 to 4, **characterized in that** the arrangement comprises a mail group communication module (140) which is adapted to generate an electronic mail to at least one recipient based on at least a sub-set of a search result of an original search performed in the data storage (170), the electronic mail, for each hit of the search result, reflecting the same components as the original search.

6. An arrangement according to any one of the preceding claims, **characterized in that** the arrangement comprises an upload module (160) which is adapted to enable storage of at least one electronic document in the original layer database (175) via the user interface (180).

7. An arrangement according to claim 6, **characterized in that** the upload module (160) is adapted to, for each of the at least one electronic document to be stored in the original layer database (175),
investigate whether on-line data is available in respect of the electronic document; and if insufficient on-line data is found,
enable a manual entry of predefined types of data in an amendable data record of the supplementary database (176) linked to the electronic document.

8. An arrangement according to any one of the preceding claims, **characterized in that** the arrangement comprises an edit module (165) which is adapted to, via the user interface (180):
enable storage, editing and deletion of at least one amendable data record in the supplementary layer database (176); and
enable deletion of at least one non-editable electronic document in the original layer database (175).

9. An arrangement according to claim 8, **characterized in that** the edit module (165) is adapted to, in response to a deletion operation in respect of an amendable data record, delete the amendable data record and a non-editable electronic document linked thereto.

10. An arrangement according to any one of the claims 8 or 9, **characterized in that** the edit module (165) is adapted to be activated via a search result window presented by the search engine module (150) via the user interface (180), the search result window providing a user-access to at least one amendable data record in the supplementary layer database (176).

11. An arrangement according to any one of the claims 8 to 10, **characterized in that** the edit module (165) is adapted to enable modification of the supplementary layer database (176) over the user interface (180), the modification involving addition of at least one logic field to at least one amendable data record in the supplementary layer database (176), deletion of at least one logic field from at least one amendable data record in the supplementary layer database (176), or editing of at least one amendable data record in the supplementary layer database (176).

12. An arrangement according to claim 11, **characterized in that** the arrangement comprises an administrator module (155) adapted to apply a modification policy in respect of the edit module (165), the modification policy specifying which user identity that is authorized to perform which of said addition, deletion and editing of the supplementary layer database (176).

13. An arrangement according to claim 12, **characterized in that** the administrator module (155) is adapted to create new customer accounts, each customer account being associated with a respective separate portion of the original layer database (175) and a separate portion of the supplementary layer database (176), and each customer account having a modification policy for at least one user associated with the account.

14. An arrangement according to any one of the preceding claims, **characterized in that** the arrangement comprises a data registration engine (110) which is adapted to:
systematically scan the contents of the original layer database (175);
compare a currently detected content of the original layer database (175) with a previously detected content thereof,
if at least one added electronic document is encountered in the currently detected content,
generate an amendable data record for each of the at least one added electronic document, and
generate a direct link between each amendable data record and each respective added electronic document; and
if at least one deleted electronic document is encountered in the currently detected content, delete any amendable data records for the at least one deleted electronic document.

15. An arrangement according to claim 14, **characterized in that** the arrangement comprises a data fetching module (130); the data registration engine (110) is adapted to:
control the data fetching module (130) to search the Internet to obtain at least one missing predefined type of data; and
enter any obtained missing predefined type of data in a relevant amendable data record of the supplementary layer database (176).

16. An arrangement according to any one of the preceding claims, **characterized in that** the arrangement comprises an OCR module (120); the data registration engine (110) is adapted to, in connection with generating an amendable data record for an electronic document added to the original layer database (175):
control the OCR module (120) to scan the added electronic document to obtain predefined types of data to be entered in the amendable data record of the supplementary layer database (176);
enter any obtained predefined types of data in the amendable data record of the supplementary layer database (176);
analyze any data obtained by the OCR module (120); and if at least one predefined type of data is missing in respect of an electronic document added to the original layer database (175),
control the data fetching module (130) to search the Internet to obtain the at least one missing predefined type of data; and
enter any obtained missing predefined type of data in an amendable data record of the supplementary layer database (176) linked to the added electronic document.

17. An arrangement according to claim 16, **characterized in that** the electronic documents represent intellectual property documents, each document being assigned at least one class of a first classification system; the arrangement comprises a multi-class fetching module (135); the data registration engine (110) is adapted to:
analyze a class field of an amendable data record in the supplementary layer database (176) for a particular electronic document in the original layer database (175); and if in the amendable data record, at least one class entry is missing out of a number of class entries in respect of classification systems in addition to the classification system,
control the multi-class fetching module (135) to search the Internet to obtain the at least one missing class entry; and
enter any obtained missing class entry in the amendable data record.

18. An arrangement according to claim 17, **characterized in that** the arrangement comprises a data fill-in fetching module (135); the data registration engine (110) is adapted to:
analyze an amendable data record of the supplementary layer database (176) for a particular electronic document in the original layer database (175); and if at least one data field out of a number of predefined data fields in the amendable data record is empty or does not fulfill a language criterion,
control the data fill-in fetching module (135) to search the Internet for patent family members of the patent document represented by the particular electronic document to obtain information to fill said at least one data field; and
enter any obtained information in the amendable data record.

19. An arrangement according to any one of the claims 14 to 18, **characterized in that** the data registration engine (110) is adapted to, after having detected an electronic document added to the original layer database (175):
investigate whether at least one of the added electronic documents contains image only information; and if so control the OCR module (120) to generate a respective text file representing any text contents of said at least one added electronic document, and
store each text file in association with a relevant added electronic document in the original layer database (175) such that the text file is searchable along with said at least one added electronic document.

20. An arrangement according to any one of the claims 14 to 19, **characterized in that** the arrangement comprises an order module (185) which is adapted to, via the user interface (180):
receive a listing of identifiers specifying a number of electronic documents to be added to the original layer database (175);
search the Internet to obtain the specified electronic documents;
download the specified electronic documents to the original layer database (175);
investigate whether at least one of the added electronic document contains image only information, and if so control the OCR module (120) to generate a respective text file representing any text contents of said at least one added electronic document; and
store each text file in association with a relevant added electronic document in the original layer database (175) such that the text file is searchable along with said at least one added electronic document.

21. A method of organizing text-searchable electronic information in a data storage (170), the data storage (170) comprising an original layer database (175) and a supplementary layer database (176), where the original layer database (175) includes non-editable electronic documents in a folder structure, and the supplementary layer database (176), for each electronic document in the original layer database (175), includes an amendable data record with a direct link to the non-editable electronic document, each of the original layer database (175) and the supplementary layer database (176) being adapted to be accessed and searched via a user interface (180) over an interconnecting network (190), the method comprising:
storing an electronic document in an electronic folder of said folder structure, the electronic folder having a specific folder name.

22. A method according to claim 21, **characterized by** investigating whether on-line data in respect of the stored electronic document is available, and if so the method comprising:
fetching predefined types of data for the document on the Internet, and otherwise the method comprising:
enabling a manual entry of the predefined types of data.

23. A method according to any one of the claims 21 or 22, **characterized by** the steps of:
storing the predefined types of data related to the electronic document in an amendable data record of a supplementary layer database (176);
creating a direct link between the stored electronic document and the amendable data record; and
adding the folder name to the amendable data record.

24. A method according to any one of the claims 20 to 23, **characterized by** the method comprising generating an amendable data record for an electronic document in the original layer database (175), and in connection there with the method involves,
scanning the electronic document to obtain predefined types of data to be entered in the supplementary layer database (176); and
entering any obtained predefined types of data in a relevant amendable data record of the supplementary layer database (176).

25. A method according to claim 24, **characterized by** the steps of:
analyzing the entered data with respect to predefined types of data, and if at least one predefined type of data is missing in respect of the electronic document;
searching the Internet to obtain the at least one missing predefined type of data; and
entering any obtained missing predefined type of data in an amendable data record of the supplementary layer database (176) linked to the electronic document.

26. A method according to any one of the claims 20 to 25, **characterized by** the electronic documents representing intellectual property documents, each document being assigned at least one class of a first classification system; the method comprising the steps of:
analyzing a class field of an amendable data record in the supplementary layer database (176) for a particular electronic document in the original layer database (175); and if in the amendable data record, at least one class entry is missing out of a number of class entries in respect of classification systems in addition to the patent classification system,
searching the Internet to obtain the at least one missing class entry; and
entering any obtained missing class entry in the amendable data record.

27. A method according to claim 26, **characterized by** the steps of:
analyzing an amendable data record of the supplementary layer database (176) for a particular electronic document in the original layer database (175); and if at least one data field out of a number of predefined data fields in the amendable data record is empty or does not fulfill a language criterion;
searching the Internet for family members of the intellectual property document represented by the particular electronic document to obtain information to fill said at least one data field; and
entering any obtained information in the amendable data record.

28. A method according to any one of the claims 20 to 27, **characterized by** investigating whether an electronic document in the original layer database (175) contains image only information, and if so
generating a text file representing any text contents of the added electronic document; and
storing the text file in association with the added electronic document in the original layer database (175) such that the text file is searchable along with the added electronic document.

29. A method according to any one of the claims 20 to 28, **characterized by** modifying the supplementary layer database (176) by means of at least one of the operations:
adding at least one logic field to at least one amendable data record in the supplementary layer database (176),
deleting at least one logic field from at least one amendable data record in the supplementary layer database (176), and
editing at least one amendable data record in the supplementary layer database (176).

30. A method according to any one of the claims 20 to 29, **characterized by** the steps of:
scanning systematically the contents of the original layer database (175);
comparing a currently detected content of the original layer database (175) with a previously detected content thereof, and if at least one added electronic document is encountered in the currently detected content;
generating an amendable data record for each of the at least one added electronic document; and
generating a direct link between each amendable data record and each respective added electronic document.

31. A method according to any one of the claims 21 to 30, **characterized by** the steps of:
receiving a listing of identifiers specifying a number of electronic documents to be added to the original layer database (175);
searching the Internet to obtain the specified electronic documents;
downloading the specified electronic documents to the original layer database (175);
investigating, for each electronic document to be added whether the document contains image only information, and if so
generating a text file that represents any text contents of the added electronic document; and
storing the text file in association with the added electronic document in the original layer database (175), such that the text file is searchable along with the added electronic document.

32. A method according to any one of the claims 21 to 31, **characterized by** the steps of:
receiving a user-entered search query;
searching the information contained in the data storage (170) in response to the search query; and
displaying a search result based on pieces of information in the original layer database (175) and the supplementary layer database (176) which match the search query, the search result comprising a set of dynamically selectable components.

33. A method according to claim 32, **characterized by** selecting a sub-set of the components of the search result.

34. A method according to any one of the claims 32 or 33, **characterized by** the steps of:
receiving user-entered information related to a search result including a number of amendable data records; and
adding said user-entered information to the amendable data records of the search result.

35. A method according to any one of the claims 32 to 34, **characterized by** generating an electronic mail to at least one recipient based on at least a sub-set of a search result of an original search performed in the data storage (170), the electronic mail, for each hit of the search result reflecting components equivalent to the dynamic components of the original search.

36. A computer program directly loadable into the internal memory of a computer, comprising software for controlling the steps of the claims 21 to 35 when said program is run on the computer.

37. A computer readable medium (115), having a program recorded thereon, where the program is to make a computer control the steps of the claims 21 to 35.
